# EUROPEAN PATENT APPLICATION

(11) **EP 4 538 410 A1**
(43) Date of publication of application: **16.04.2025**
(21) Application number: 23819914.5
(22) Date of filing: 09.06.2023
(51) Int. Cl.: C23C 2/06, C22C 18/00, C22C 18/04, C23C 2/02, C23C 2/40

(54) **ZN-AL-MG HOT-DIP PLATED STEEL SHEET**

(30) Priority: 10.06.2022 JP 2022094346
(71) Applicant: NIPPON STEEL CORPORATION, Chiyoda-ku Tokyo 100-8071 (JP)
(72) Inventor: TOBA, Tetsuya, Tokyo 100-8071 (JP); KAWAMURA, Yasuaki, Tokyo 100-8071 (JP); KOHIGASHI, Yusuke, Tokyo 100-8071 (JP); TANAKA, Tomohito, Tokyo 100-8071 (JP)
(74) Representative: Vossius & Partner Patentanwälte Rechtsanwälte mbB
(86) International application number: PCT/JP2023/021552
(87) International publication number: WO 2023/238934

(57) **Abstract**

A Zn-Al-Mg-based hot-dip plated steel sheet includes a steel sheet and a hot-dip plated layer formed on a surface of the steel sheet, in which the hot-dip plated layer contains, as an average composition, Al: more than 10 to 22 mass% and Mg: 1.0 to 10 mass%, with a remainder including Zn and impurities, and in a case where a 5 mm square cross section parallel to a surface of the hot-dip plated layer is exposed at any position of a 3t/4 position, a t/2 position, and a t/4 position from the surface with a thickness of the hot-dip plated layer represented by t, an area fraction of a [Zn phase] of a plating microstructure in at least one of the cross sections is less than 20%.

## Description

### TECHNICAL FIELD

The present invention relates to a Zn-Al-Mg-based hot-dip plated steel sheet having a lustrous external appearance.

Priority is claimed on Japanese Patent Application No. 2022-094346, filed June 10, 2022, the content of which is incorporated herein by reference.

### BACKGROUND ART

A hot-dip plated steel sheet is used as a steel sheet having good corrosion resistance. A hot-dip galvanized steel sheet, which is a representative example of the hot-dip plated steel sheet, is widely used in various manufacturing industries such as the fields of automobiles, home appliances, and building materials. In addition, a highly corrosion-resistant hot-dip galvanized steel sheet obtained by incorporating Al or Mg into a hot-dip galvanized layer has been proposed for the purpose of further improving the corrosion resistance of the hot-dip galvanized steel sheet. For example, Patent Documents 1 to 3 propose a Zn-Al-Mg-based hot-dip plated steel sheet.

The Zn-Al-Mg-based hot-dip plated steel sheet mainly contains four types of phases and microstructures of an [Al phase], a [Zn phase], a [MgZn₂ phase], and an [Al/MgZn₂/Zn ternary eutectic structure] in the hot-dip plated layer. When Si is contained in the hot-dip plated layer in addition to Zn, Al, and Mg, mainly five types of phases and microstructures including a [Mg₂Si phase] are contained in addition to the above four types of phases and microstructures. As described above, since various phases and microstructures are present in a mixed state in the hot-dip plated layer of the Zn-Al-Mg-based hot-dip plated steel sheet, the surface of the hot-dip plated layer has a satin-like external appearance.

### Citation List

### Patent Documents

Patent Document 1: Japanese Unexamined Patent Application, First Publication No. H10-226865
Patent Document 2: Japanese Unexamined Patent Application, First Publication No. H10-306357
Patent Document 3: Japanese Unexamined Patent Application, First Publication No. 2004-68075

### SUMMARY OF INVENTION

### Technical Problem

Like a hot-dip galvanized steel sheet, a Zn-Al-Mg-based hot-dip plated steel sheet is widely used in various manufacturing industries such as the fields of automobiles, home appliances, and building materials. In recent years, there has been an increasing demand from consumers for the surface external appearance of a plated steel sheet, and a Zn-Al-Mg-based hot-dip plated steel sheet is required to have an external appearance with stronger metallic luster.

The present invention has been made in view of the above circumstances, and an object of the present invention is to provide a Zn-Al-Mg-based hot-dip plated steel sheet in which the metallic luster of the surface of a hot-dip plated layer is excellent as compared with the related art, and corrosion resistance is also excellent.

### Solution to Problem

In order to solve the above problem, the present invention adopts the following configurations.
[1] A Zn-Al-Mg-based hot-dip plated steel sheet, including a steel sheet and a hot-dip plated layer formed on a surface of the steel sheet, wherein
   the hot-dip plated layer contains, as an average composition, Al: more than 10 to 22 mass% and Mg: 1.0 to 10 mass%, with a remainder including Zn and impurities, and
   in a case where a 5 mm square cross section parallel to a surface of the hot-dip plated layer is exposed at any position of a 3t/4 position, a t/2 position, and a t/4 position from the surface with a thickness of the hot-dip plated layer represented by t, an area fraction of a [Zn phase] of a plating microstructure in at least one of the cross sections is less than 20%.
[2] A Zn-Al-Mg-based hot-dip plated steel sheet, including a steel sheet and a hot-dip plated layer formed on a surface of the steel sheet, wherein
   the hot-dip plated layer contains, as an average composition, Al: more than 10 to 22 mass% and Mg: 1.0 to 10 mass%, with a remainder including Zn and impurities, and
   further contains one or two selected from the group consisting of group A and group B below, and
   in a case where a 5 mm square cross section parallel to a surface of the hot-dip plated layer is exposed at any position of a 3t/4 position, a t/2 position, and a t/4 position from the surface with a thickness of the hot-dip plated layer represented by t, an area fraction of a [Zn phase] of a plating microstructure in at least one of the cross sections is less than 20%.
   [Group A] Si: 0.0001 to 2 mass%
   [Group B] one or two or more of Ni, Ti, Zr, Sr, Fe, Sb, Pb, Sn, Ca, Co, Mn, P, B, Bi, Cr, Sc, Y, REM, Hf, and C: 0.0001 to 2 mass% in total
[3] The Zn-Al-Mg-based hot-dip plated steel sheet according to [1] or [2], wherein a ratio (B/A (%)) of an area fraction B of a [Zn phase] to a total area fraction A of a [Zn phase] and an [Al/MgZn₂/Zn ternary eutectic structure] of a plating microstructure in at least one of the cross sections is less than 20%.
[4] The Zn-Al-Mg-based hot-dip plated steel sheet according to [2], wherein the hot-dip plated layer has an average composition containing the group A in terms of mass%.
[5] The Zn-Al-Mg-based hot-dip plated steel sheet according to [2], wherein the hot-dip plated layer has an average composition containing the group B in terms of mass%.

### Advantageous Effects of Invention

According to the present invention, it is possible to provide a Zn-Al-Mg-based hot-dip plated steel sheet in which the metallic luster of a surface of a hot-dip plated layer is excellent as compared with the related art, and corrosion resistance is also excellent.

### BRIEF DESCRIPTION OF DRAWINGS

FIG. 1 is a schematic cross-sectional view for explaining an exposed surface for measuring a plating microstructure of a hot-dip plated layer in a Zn-Al-Mg-based hot-dip plated steel sheet according to an embodiment of the present invention.
FIG. 2 is a perspective view for explaining an exposed surface for measuring a plating microstructure of a hot-dip plated layer in a Zn-Al-Mg-based hot-dip plated steel sheet according to an embodiment of the present invention.

### DESCRIPTION OF EMBODIMENTS

The present inventors investigated in detail a plated layer of a conventional Zn-Al-Mg-based hot-dip plated steel sheet having a satin-like external appearance. The satin-like external appearance appears due to coexistence of a fine lustrous portion exhibiting metallic luster and a fine white portion exhibiting white in a mixed state. Among them, when the microstructure of the plated layer in the lustrous portion was examined, it was found that the area fraction of a [Zn phase] on the surface of the plated layer is smaller than that in the white portion. Meanwhile, when the microstructure of the plated layer in the white portion was examined, it was found that the ratio of the [Zn phase] to the [Al/MgZn₂/Zn ternary eutectic structure] is higher than that in the lustrous portion.

Therefore, the present inventors intensively studied in order to obtain a lustrous external appearance as a whole by increasing the lustrous portion and decreasing the white portion in the hot-dip plated layer, and found that the surface external appearance of the plated layer exhibits metallic luster as a whole by adjusting the chemical composition of the hot-dip plated layer and decreasing the proportion of the [Zn phase]. In addition, the present inventors found that when the ratio of the [Zn phase] to the total of the [Al/MgZn₂/Zn ternary eutectic structure] and the [Zn phase] is reduced in the entire plated layer, the external appearance of the plated layer exhibits more metallic luster.

Hereinafter, a Zn-Al-Mg-based hot-dip plated steel sheet according to an embodiment of the present invention will be described.

The Zn-Al-Mg-based hot-dip plated steel sheet of the present embodiment includes a steel sheet and a hot-dip plated layer formed on a surface of the steel sheet, in which the hot-dip plated layer contains, as an average composition, Al: more than 10 to 22 mass% and Mg: 1.0 to 10 mass%, with a remainder including Zn and impurities, and in a case where a 5 mm square cross section parallel to a surface of the plated layer is exposed at any position of a 3t/4 position, a t/2 position, and a t/4 position from the surface of the hot-dip plated layer with a thickness of the hot-dip plated layer represented by t, an area fraction of a [Zn phase] of a plating microstructure in at least one of the cross sections is less than 20%. Here, the 5 mm square cross section parallel to a surface of the plated layer refers to a square-shaped exposed surface that is parallel to the surface and has a 5 mm square size in plane view.

The material of the steel material as a base of the hot-dip plated layer is not particularly limited. As the material, it can be applied to general steel, Al-killed steel, and some high-alloy steels, and the shape is not particularly limited. The steel material may be subjected to Ni pre-plating. The hot-dip plated layer according to the present embodiment is formed by applying a hot-dip plating method described later to a steel material.

Next, the chemical composition of the hot-dip plated layer will be described.

The hot-dip plated layer according to the present embodiment contains, as an average composition, Al: more than 10 to 22 mass% and Mg: 1.0 to 10 mass%, with the remainder including Zn and impurities.

Further, the hot-dip plated layer may contain one or two selected from the group consisting of group A and group B below.
[Group A] Si: 0.0001 to 2 mass%
[Group B] one or two or more of Ni, Ti, Zr, Sr, Fe, Sb, Pb, Sn, Ca, Co, Mn, P, B, Bi, Cr, Sc, Y, REM, Hf, and C: 0.0001 to 2 mass% in total

The content of Al is in the range of more than 10 mass% and 22 mass% or less as an average composition. Al is an element necessary for ensuring corrosion resistance. When the content of Al in the hot-dip plated layer is 10 mass% or less, the effect of improving corrosion resistance becomes insufficient, and when the content exceeds 22 mass%, corrosion resistance is deteriorated although the cause is unknown. From the viewpoint of corrosion resistance, the content is preferably set to more than 10 mass% and 20 mass% or less. The content is more preferably set to more than 10 mass% and 18 mass% or less. The content is more preferably set to 11 mass% or more. The content is more preferably set to 19 mass% or less.

The content of Mg is in the range of 1.0 to 10 mass% as an average composition. Mg is an element necessary for improving the corrosion resistance of the hot-dip plated layer. When the content of Mg in the hot-dip plated layer is less than 1.0 mass%, the effect of improving the corrosion resistance is insufficient, and when the content exceeds 10 mass%, the occurrence of dross in a plating bath becomes significant, and it becomes difficult to stably manufacture a plated steel material. The content is preferably set to 1.5 mass% or more from the viewpoint of balance between the corrosion resistance and the occurrence of dross. The content is preferably set to 8 mass% or less. The content is more preferably set to 2 mass% or more. The content is more preferably set to 6 mass% or less.

The hot-dip plated layer may contain Si in the range of 0.0001 to 2 mass%. Si is an element effective for improving the adhesion of the hot-dip plated layer. When Si is incorporated in an amount of 0.0001 mass% or more, an effect of improving adhesion is exhibited, and therefore Si is preferably incorporated in an amount of 0.0001 mass% or more. On the other hand, even when Si is incorporated in an amount exceeding 2 mass%, the effect of improving plating adhesion is saturated, and therefore the content of Si is set to 2 mass% or less. From the viewpoint of plating adhesion, the content may be set to 0.01 mass% or more, or 1 mass% or less. The content may be set to 0.03 mass% or more, or 0.8 mass% or more.

In addition, the hot-dip plated layer may contain, as an average composition, any one or two or more of Ni, Ti, Zr, Sr, Fe, Sb, Pb, Sn, Ca, Co, Mn, P, B, Bi, Cr, Sc, Y, REM, Hf, and C in a total amount of 0.0001 to 2 mass%. The content may be in the range of 0.01 to 2 mass%. By the incorporation of these elements, corrosion resistance can be further improved. REM is one or two or more of rare earth elements having atomic numbers 57 to 71 in the periodic table.

The remainder of the chemical composition of the hot-dip plated layer includes zinc and impurities.

The composition of the hot-dip plated layer can be measured by the following method. First, the surface layer coating film is removed with a coating film remover (for example, NEOREVER SP-751 manufactured by SANSAIKAKO) that does not erode plating, then the hot-dip plated layer is dissolved with hydrochloric acid containing an inhibitor (for example, HIBIRON manufactured by Sugimura Chemical Industry Co., Ltd.), and the obtained solution is subjected to inductively coupled plasma (ICP) optical emission spectroscopy, whereby the composition can be determined.

Next, the microstructure of the hot-dip plated layer will be described. The microstructure of the hot-dip plated layer of the present embodiment may have, for example, the following microstructure.

The hot-dip plated layer containing Al, Mg, and Zn contains an [Al phase], a [MgZn₂ phase], and a [Zn phase], and an [Al/Zn/MgZn₂ ternary eutectic structure]. Specifically, it has a form in which an [Al phase], a [MgZn₂ phase], and a [Zn phase] are contained in the matrix of an [Al/Zn/MgZn₂ ternary eutectic structure]. When Si is incorporated, a [Mg₂Si phase] may be contained in the matrix of an [Al/Zn/MgZn₂ ternary eutectic structure].

### [Al/Zn/MgZn₂ ternary eutectic structure]

The [Al/Zn/MgZn₂ ternary eutectic structure] is a ternary eutectic structure of an Al phase, a Zn phase, and an intermetallic compound MgZn₂ phase, and the Al phase forming the ternary eutectic structure corresponds to, for example, an "Al" phase" (which is an Al solid solution in which Zn is solid-dissolved and contains a small amount of Mg) at a high temperature in an Al-Zn-Mg ternary equilibrium phase diagram.

The Al" phase at a high temperature usually appears separated into a fine Al phase and a fine Zn phase at normal temperature. The Zn phase in the ternary eutectic structure is a Zn solid solution in which a small amount of Al is solid-dissolved, and in some cases, further a small amount of Mg is solid-dissolved. The MgZn₂ phase in the ternary eutectic structure is an intermetallic compound phase present in the vicinity of Zn: about 84 mass% in a Zn-Mg binary equilibrium phase diagram.

As seen in the phase diagram, it is considered that another additive element is not solid-dissolved in each phase, or even if an additive element is solid-dissolved, the amount of the additive element is extremely small. However, since the amount thereof cannot be clearly distinguished by an ordinary analysis, the ternary eutectic structure formed of these three phases is represented by an [Al/Zn/MgZn₂ ternary eutectic structure] in the present specification.

### [Al phase]

The [Al phase] is a phase that looks like an island with a clear boundary in the matrix of the [Al/Zn/MgZn₂ ternary eutectic structure], and this corresponds to, for example, an "Al" phase" (which is an Al solid solution in which Zn is solid-dissolved and contains a small amount of Mg) at a high temperature in an Al-Zn-Mg ternary equilibrium phase diagram. In the Al" phase at a high temperature, the amount of Zn and the amount of Mg to be solid-dissolved differ depending on the Al and Mg concentrations in the plating bath. The Al" phase at a high temperature is usually separated into a fine Al phase and a fine Zn phase at normal temperature, but the islandlike shape observed at normal temperature is considered to be attributed to the shape of the Al" phase at a high temperature.

As seen in the phase diagram, it is considered that another additive element is not solid-dissolved in this phase, or even if an additive element is solid-dissolved, the amount of the additive element is extremely small. However, since it cannot be clearly distinguished by an ordinary analysis, a phase, which is derived from the Al" phase at a high temperature and whose shape is attributed to the shape of the Al" phase is referred to as [Al phase] in the present specification.

The [Al phase] can be clearly distinguished from the Al phase forming the [Al/Zn/MgZn₂ ternary eutectic structure] by microscopic observation.

### [Zn phase]

The [Zn phase] is a phase that looks like an island with a clear boundary in the matrix of the [Al/Zn/MgZn₂ ternary eutectic structure], and in practice, a small amount of Al or a small amount of Mg may be solid-dissolved. As seen in the phase diagram, it is considered that another additive element is not solid-dissolved in this phase, or even if an additive element is solid-dissolved, the amount of the additive element is extremely small.

The [Zn phase] is a region in which a Zn phase has a circle equivalent diameter of 2.5 µm or more, and can be clearly distinguished from the Zn phase forming the [Al/Zn/MgZn₂ ternary eutectic structure] by microscopic observation.

### [MgZn₂ phase]

The [MgZn₂ phase] is a phase that looks like an island with a clear boundary in the matrix of the [Al/Zn/MgZn₂ ternary eutectic structure], and in practice, a small amount of Al may be solid-dissolved. As seen in the phase diagram, it is considered that another additive element is not solid-dissolved in this phase, or even if an additive element is solid-dissolved, the amount of the additive element is extremely small.

The [MgZn₂ phase] and the MgZn₂ phase forming the [Al/Zn/MgZn₂ ternary eutectic structure] can be clearly distinguished from each other by microscopic observation. The hot-dip plated layer according to the present embodiment may not contain [MgZn₂ phase] depending on the manufacturing conditions, but it is contained in the hot-dip plated layer under most manufacturing conditions.

### [Mg₂Si phase]

The [Mg₂Si phase] is a phase that looks like an island with a clear boundary in a solidified microstructure of the hot-dip plated layer to which Si is added. As seen in the phase diagram, it is considered that Zn, Al, or another additive element is not solid-dissolved in the [Mg₂Si phase], or even if it is solid-dissolved, the amount of thereof is extremely small. The [Mg₂Si phase] can be clearly distinguished from other phases in the hot-dip plated layer by microscopic observation.

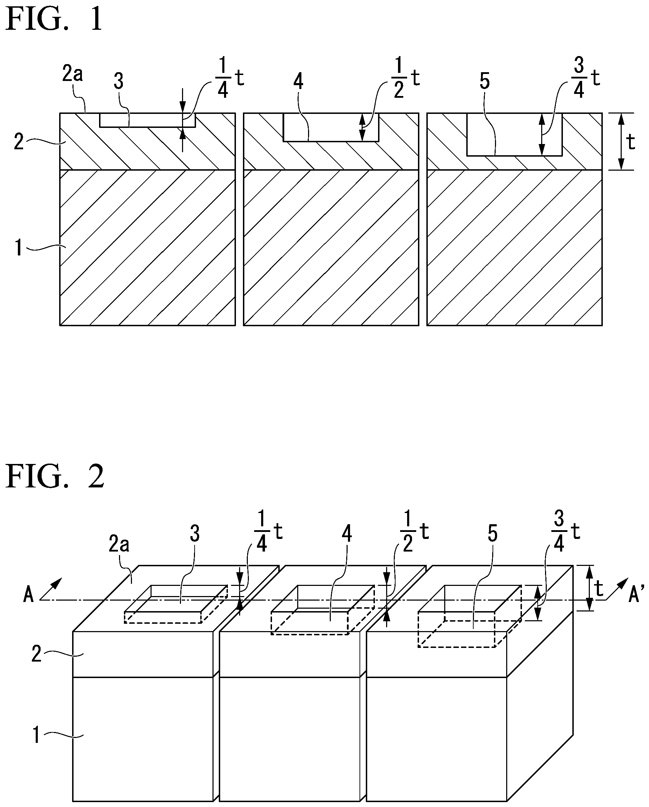

Next, the content of the [Zn phase] will be described. In the present embodiment, as shown in FIGS. 1 and 2, in a case where a hot-dip plated layer 2 is cut out at any position of a 3t/4 position, a t/2 position, and a t/4 position from a surface 2a of the hot-dip plated layer 2 with the thickness of the hot-dip plated layer 2 formed on a steel sheet 1 represented by t, so that exposed surfaces 3, 4, and 5 parallel to the surface 2a and having a square shape with a 5 mm square size in plane view appear, the area fraction of the [Zn phase] of the plating microstructure in at least one of the exposed surfaces 3 to 5 is less than 20%. The area fraction of the [Zn phase] may be 15% or less, less than 15%, 10% or less, or 5% or less. When the area fraction of the [Zn phase] is 20% or less, the occupancy ratio of a fine lustrous portion exhibiting metallic luster increases on the surface of the hot-dip plated layer, so that the entire external appearance of the hot-dip plated layer exhibits metallic luster. The lower limit of the area fraction of the [Zn phase] does not need to be particularly limited, but may be more than 0%, 1% or more, or 2% or more. The schematic cross-sectional view shown in FIG. 1 is a cross-sectional view taken along plane A-A' of FIG. 2.

Further, it is preferable that in at least one of the exposed surfaces 3 to 5, the ratio (B/A (%)) of an area fraction B of a [Zn phase] to a total area fraction A of a [Zn phase] and an [Al/MgZn₂/Zn ternary eutectic structure] of a plating microstructure is less than 20%. The ratio (B/A (%) may be 15% or less, less than 15%, or 10% or less. The lower limit of the ratio (B/A (%)) does not need to be particularly limited, but may be 1% or more, 2% or more, or 5% or more.

In addition, the area fraction of the [Al phase] in the exposed surface for which the area fraction of the [Zn phase] has been measured may be, for example, 30 to 80 area% or 40 to 65 area%.

Further, the area fraction of the [Al/MgZn₂/Zn ternary eutectic structure] in the exposed surface for which the area fraction of the [Zn phase] has been measured may be, for example, 10 to 75 area% or 20 to 65 area%.

Still further, the area fraction of the [MgZn₂ phase] in the exposed surface for which the area fraction of the [Zn phase] has been measured may be, for example, 0 to 60 area% or 10 to 40 area%.

Still further, the area fraction of the [Mg₂Si phase] in the exposed surface for which the area fraction of the [Zn phase] has been measured may be, for example, 0 to 5 area% or 0 to 1 area%.

When the exposed surfaces 3, 4, and 5 of 5 mm square parallel to the surface are formed at any position of the 3t/4 position, the t/2 position, and the t/4 position from the surface 2a of the hot-dip plated layer 2, the hot-dip plated layer is scraped off by a method such as grinding or argon sputtering. In addition, the exposed surface is desirably a mirror surface, and for example, the maximum height Rz of the exposed surface is desirably 0.2 µm or less. The exposed surface to be observed may be an exposed surface at any depth of the 3t/4 position, the t/2 position, and the t/4 position from the surface of the hot-dip plated layer. It is preferable to select the exposed surface at the t/2 position. If the area fraction of the [Zn phase] or the B/A ratio satisfies the range of the present invention in the exposed surface at the t/2 position, there is a high possibility that the area fraction of the [Zn phase] or the B/A ratio satisfies the range of the present invention also at the other positions. More preferably, the area fraction of the [Zn phase] or the B/A ratio may satisfy the range of the present invention in the exposed surfaces at any two depths of the 3 t/4 position, the t/2 position, and the t/4 position from the surface of the hot-dip plated layer. More preferably, the area fraction of the [Zn phase] or the B/A ratio may satisfy the range of the present invention in the exposed surfaces at all depths of the 3t/4 position, the t/2 position, and the t/4 position from the surface of the hot-dip plated layer.

The plating microstructure is observed in a secondary electron image of a scanning electron microscope (SEM) on an exposed surface having a size of 5 mm × 5 mm to identify the [Zn phase] and the [Al/MgZn₂/Zn ternary eutectic structure]. When each phase and a microstructure are identified, an elemental analysis by an energy dispersive X-ray elemental analyzer attached to the SEM is used in combination, and each phase and a microstructure are identified while the distributions of Zn, Al, and Mg are checked. That is, among Zn, Al, and Mg, a region where Zn is mainly detected is defined as a Zn phase, a region where Al is mainly detected is defined as an Al phase, and a region where Zn and Mg are mainly detected is defined as a MgZn₂ phase. From the distribution of each phase detected, the phases are classified into [Al phase], [MgZn₂ phase], and [Zn phase], and [Al/Zn/MgZn₂ ternary eutectic structure] according to the above-described method. Then, the area fraction of the [Zn phase] in the exposed surface is determined, and the ratio (B/A (%)) of the area fraction B of the [Zn phase] to the total area fraction A of the [Zn phase] and the [Al/MgZn₂/Zn ternary eutectic structure] is further determined. As for the [Zn phase], a region having a circle equivalent diameter of 2.5 µm or more is measured as the [Zn phase]. Thus, the Zn phase in the [Al/MgZn₂/Zn ternary eutectic structure] and the [Zn phase] are distinguished.

Next, a method for manufacturing the Zn-Al-Mg-based hot-dip plated steel sheet of the present embodiment will be described.

When the Zn-Al-Mg-based hot-dip plated steel sheet of the present embodiment is manufactured, it is necessary to control the microstructure of the hot-dip plated layer so that the area fraction of the [Zn phase] in the exposed surface parallel to the surface of the hot-dip plated layer at any position of the 3t/4 position, the t/2 position, and the t/4 position from the surface is small.

In order to manufacture the Zn-Al-Mg-based hot-dip plated steel sheet by a hot-dip plating method, the steel sheet is immersed in a hot-dip plating bath in which chemical composition is adjusted, thereby adhering a molten metal to the sheet surface. Subsequently, the steel sheet is pulled up from the plating bath, and the molten metal is solidified after the adhesion amount is controlled by gas wiping. During solidification, depending on the composition, an [Al phase] is first formed, and then an [Al/Zn/MgZn₂ ternary eutectic structure] is formed as the temperature of the molten metal decreases. In addition, a [MgZn₂ phase] and a [Zn phase] are formed in the matrix of the [Al/Zn/MgZn₂ ternary eutectic structure]. Further, when Si is contained in the hot-dip plated layer, a [Mg₂Si phase] is formed in the matrix of the [Al/Zn/MgZn₂ ternary eutectic structure].

It has been found that when a coarse [Zn phase] is formed, the proportion of the [Al phase] or the [MgZn₂ phase] in the hot-dip plated layer relatively increases, and these phases are exposed on the plated surface, and therefore the quality of the surface external appearance is deteriorated. It is presumed that the formation of the [Zn phase] is affected by the number of nucleation points for Zn. That is, when the number of nucleation points for Zn is large, Zn in the liquid phase immediately before final solidification crystallizes as a fine Zn phase in the [Al/Zn/MgZn₂ ternary eutectic structure]. Therefore, the present inventors have found that by increasing the number of nucleation points for Zn, the formation of a coarse [Zn phase] can be prevented to improve the quality of the surface external appearance. As a method for increasing the number of nucleation points for Zn, it is conceivable to adhere a substance that can become a nucleation point for Zn to the surface of the steel sheet that is the original sheet.

Hereinafter, the manufacturing method will be described in detail.

A hot-rolled steel sheet is manufactured, and hot-rolled sheet annealing is performed as necessary. After pickling, cold rolling is performed as necessary to obtain a cold-rolled sheet. The hot-rolled sheet or the cold-rolled sheet is degreased and washed with water, then annealed, and the hot-rolled sheet or the cold-rolled sheet after annealing is immersed in a hot-dip plating bath to form a hot-dip plated layer.

Here, a Zn powder is adhered to the hot-rolled sheet or the cold-rolled sheet after annealing before immersion in the hot-dip plating bath. The adhered Zn powder is not completely dissolved during hot-dip plating, and becomes a nucleation site for Zn at the time of final solidification of plating. Part of the Zn powder is diffused in the plating bath as a solid. In the manufacturing method of the present embodiment, it is achieved only when the Zn powder is adhered after annealing and before immersion in the plating bath. When the Zn powder is adhered before annealing, Zn is alloyed with the steel sheet during annealing, and formation of a hot-dip plated layer is inhibited. When the Zn powder is adhered after immersion in the hot-dip plating bath, the adhered Zn powder may cause the surface external appearance of plating to become rough instead. The Zn powder to be adhered may be a Zn powder containing Zn and impurities. The average grain size of the Zn powder may be, for example, in the range of 4 to 6 µm. The adhesion amount of the Zn powder is preferably, for example, about 1 to 5 g/m² per surface. When the average grain size and the adhesion amount are within these ranges, the Zn powder can be made to function as a nucleation site for Zn. The adhesion of the Zn powder may be performed when the sheet temperature of the hot-rolled sheet or the cold-rolled sheet is in the range of the bath temperature + 10°C to 20°C.

Subsequently, the steel sheet is immersed in a hot-dip plating bath. The hot-dip plating bath preferably contains Al: more than 10 to 22 mass% and Mg: 1.0 to 10 mass%, with the remainder including Zn and impurities. The hot-dip plating bath may contain Si: 0.0001 to 2 mass%. In addition, the hot-dip plating bath may contain any one or two or more of Ni, Ti, Zr, Sr, Fe, Sb, Pb, Sn, Ca, Co, Mn, P, B, Bi, Cr, Sc, Y, REM, Hf, and C in a total amount of 0.0001 to 2 mass%.

The temperature of the hot-dip plating bath is preferably in the range of 400 to 500°C. This is because when the temperature of the hot-dip plating bath is in this range, a desired hot-dip plated layer can be formed.

The adhesion amount of the hot-dip plating layer may be adjusted by means such as gas wiping on the steel sheet pulled up from the hot-dip plating bath. The adhesion amount of the hot-dip plated layer is preferably adjusted so that the total adhesion amount on both surfaces of the steel sheet falls within the range of 30 to 600 g/m². It is not preferable that the adhesion amount is less than 30 g/m² because the corrosion resistance of the Zn-Al-Mg-based hot-dip plated steel sheet is deteriorated. It is not preferable that the adhesion amount exceeds 600 g/m² because a molten metal adhered to the steel sheet drips, and the surface of the hot-dip plated layer cannot be made smooth.

After the adhesion amount of the hot-dip plated layer is adjusted, the steel sheet is cooled. Cooling of the molten metal adhered to the steel sheet is started after the steel sheet is pulled up from the hot-dip plating bath. Depending on the composition of the hot-dip plating bath, the [Al phase] starts to crystallize around 430°C. Subsequently, [MgZn₂] starts to crystallize at around 370°C, and an [Al/Zn/MgZn₂ ternary eutectic structure] starts to crystallize at around 340°C, and further a [Zn phase] starts to crystallize, and solidification is completed.

At this time, since many Zn powder grains adhered to the steel sheet act as nucleation points for Zn, Zn in the liquid phase is formed as a fine Zn phase in the [Al/Zn/MgZn₂ ternary eutectic structure], and meanwhile, formation of a coarse Zn phase ([Zn phase]) having a circle equivalent diameter of 2.5 µm or more is prevented.

When a chemical conversion treatment layer is formed on the surface of the hot-dip plated layer, the hot-dip plated steel sheet after the hot-dip plated layer is formed is subjected to a chemical conversion treatment. The type of the chemical conversion treatment is not particularly limited, and a known chemical conversion treatment can be used.

When a coating film layer is formed on the surface of the hot-dip plated layer or the surface of the chemical conversion treatment layer, the hot-dip plated steel sheet after the hot-dip plated layer is formed or after the chemical conversion treatment layer is formed is subjected to a coating treatment. The type of the coating treatment is not particularly limited, and a known coating treatment can be used.

As described above, according to the present embodiment, the metallic luster of the surface of the hot-dip plated layer can be enhanced as compared with the related art. Examples

Next, Examples of the present invention will be described. The steel sheet after cold rolling was degreased and washed with water. Thereafter, the steel sheet was subjected to cold-rolled annealing. A Zn powder having an average grain size in the range of 4 to 6 µm was adhered to the steel sheet after cold-rolled annealing in an adhesion amount of 1 to 5 g/m² per surface, and the steel sheet was immersed in a hot-dip plating bath and then pulled up. Thereafter, the adhesion amount was adjusted by gas wiping, and further cooling was performed. In No. 67, annealing and hot-dip plating were performed after the Zn powder was adhered, in No. 68, the Zn powder was adhered after hot-dip plating, and in No. 69, hot-dip plating was performed without the Zn powder. In this way, hot-dip plated steel sheets of Nos. 1 to 69 shown in Tables 1A and 2B were manufactured.

As shown in FIG. 1, 5 mm square exposed surfaces parallel to the surface of the hot-dip plated layer were formed at the t/4 position, the t/2 position, and the 3t/4 position from the surface in the obtained hot-dip plated steel sheet. The exposed surfaces were formed by scraping the hot-dip plated layer by grinding and then performing mirror polishing.

The plating microstructure was observed in a secondary electron image of a scanning electron microscope (SEM) on each exposed surface having a size of 5 mm × 5 mm to identify the [Zn phase] and the [Al/MgZn₂/Zn ternary eutectic structure]. When each phase and a microstructure were identified, an elemental analysis by an energy dispersive X-ray elemental analyzer attached to the SEM was used in combination, and each phase and a microstructure were identified while the distributions of Zn, Al, and Mg were checked. Then, the area fraction of the [Zn phase] in each exposed surface was determined, and the ratio (B/A (%)) of the area fraction B of the [Zn phase] to the total area fraction A of the [Zn phase] and the [Al/MgZn₂/Zn ternary eutectic structure] was further determined. As for the [Zn phase], a region having a circle equivalent diameter of 2.5 µm or more was measured as the [Zn phase]. Thus, the Zn phase in the [Al/MgZn₂/Zn ternary eutectic structure] and the [Zn phase] were distinguished.

The results are shown in Tables 2A and 2B.

In addition, in the exposed surface for which the area fraction of the [Zn phase] was measured in Nos. 1 to 62, the area fraction of the [Al phase] was in the range of 30 to 80 area%, the area fraction of the [Al/MgZn₂/Zn ternary eutectic structure] was in the range of 10 to 75 area%, the area fraction of the [MgZn₂ phase] was in the range of 0 to 60 area%, and the area fraction of the [Mg₂Si phase] was in the range of 0 to 5 area%.

In addition, the surface of the hot-dip plated layer of the obtained hot-dip plated steel sheet was observed and visually evaluated based on the following determination criteria. A and B were evaluated as acceptable. The results are shown in Tables 2A and 2B.

A: No uneven external appearance other than luster is observed even from 0.5 m ahead.
B: Uneven external appearance other than luster is observed from 0.5 m ahead, but uneven external appearance other than luster is not observed from 2 m ahead.
C: Uneven external appearance other than luster is observed even from 2 m ahead.

The corrosion resistance of the hot-dip plated steel sheet was evaluated by the corrosion loss after a CCT test. The plated steel sheet was cut into 150 × 70 mm, and the corrosion loss after 30 cycles of CCT was investigated using CCT in accordance with JASO-M609. In the evaluation, a corrosion loss of less than 30 g/m² was evaluated as F, a corrosion loss of 30 g/m² or more and less than 50 g/m² was evaluated as G, a corrosion loss of 50 g/m² or more was evaluated as P, and F and G were evaluated as acceptable. The results are shown in Tables 2A and 2B.

In the hot-dip plated steel sheets of No. 1 to No. 62, the chemical composition of the hot-dip plated layer fell within the range of the present invention, and a Zn powder was adhered after annealing and before hot-dip plating. Therefore, the Zn powder functioned as each generation site for Zn during solidification of the hot-dip plated layer, and as a result, when a 5 mm square exposed surface was formed at the 3t/4 position, the t/2 position, or the t/4 position from the surface of the hot-dip plated layer, the area fraction of the [Zn phase] of the plating microstructure in at least one exposed surface was less than 20%. Therefore, the external appearance of the hot-dip plated layer became a lustrous external appearance. In addition, corrosion resistance was also good.

In the hot-dip plated steel sheet of No. 63, since the Al content of the hot-dip plated layer was small, the corrosion resistance was deteriorated.

In the hot-dip plated steel sheet of No. 64, since the Al content of the hot-dip plated layer was excessive, the corrosion resistance was deteriorated.

In the hot-dip plated steel sheet of No. 65, since the Mg content of the hot-dip plated layer was small, the corrosion resistance was deteriorated.

In the hot-dip plated steel sheet of No. 66, since the Mg content of the hot-dip plated layer was excessive, the corrosion resistance was deteriorated. In addition, the area fraction of the [Zn phase] of the plating microstructure was 20% or more, and the luster of the external appearance of the hot-dip plated layer was insufficient.

In the hot-dip plated steel sheet of No. 67, since annealing and hot-dip plating were performed after adhesion of the Zn powder, the Zn powder was alloyed with the steel sheet during annealing, and did not function as a nucleation site for Zn. For this reason, the area fractions of the [Zn phase] were all 20% or more at the 3 t/4 position, the t/2 position, and the t/4 position from the surface of the hot-dip plated layer, and the luster of the external appearance of the hot-dip plated layer was insufficient.

In the hot-dip plated steel sheet of No. 68, since the Zn powder was adhered after hot-dip plating, the Zn powder did not function as a nucleation site for Zn. For this reason, the area fractions of the [Zn phase] were all 20% or more at the 3 t/4 position, the t/2 position, and the t/4 position from the surface of the hot-dip plated layer, and the luster of the external appearance of the hot-dip plated layer was insufficient.

In the hot-dip plated steel sheet of No. 69, since a Zn powder was not adhered, the Zn powder did not function as a nucleation site for Zn. For this reason, the area fractions of the [Zn phase] were all 20% or more at the 3 t/4 position, the t/2 position, and the t/4 position from the surface of the hot-dip plated layer, and the luster of the external appearance of the hot-dip plated layer was insufficient.

**[Table 1A]**

| No. | Manufacturing method | Hot-dip plated steel sheet | | | | |
|---|---|---|---|---|---|---|
| | | Average composition (mass%) remainder: Zn and impurities | | | | Plating adhesion amount (total amount on both surfaces) (g/m²) |
| | | Al | Mg | Si | Others | |
| 1 | Zn powder adhered after annealing | 10.2 | 3.0 | 0.2 | - | 290 |
| 2 | Zn powder adhered after annealing | 11 | 3.0 | 0.2 | - | 300 |
| 3 | Zn powder adhered after annealing | 19 | 6.0 | 0.2 | - | 310 |
| 4 | Zn powder adhered after annealing | 22 | 6.0 | 0.2 | - | 280 |
| 5 | Zn powder adhered after annealing | 11 | 1.0 | 0.2 | - | 600 |
| 6 | Zn powder adhered after annealing | 11 | 1.5 | 0.2 | - | 500 |
| 7 | Zn powder adhered after annealing | 11 | 2.0 | 0.2 | - | 450 |
| 8 | Zn powder adhered after annealing | 11 | 6.0 | 0.2 | - | 340 |
| 9 | Zn powder adhered after annealing | 11 | 8.0 | 0.2 | - | 150 |
| 10 | Zn powder adhered after annealing | 11 | 10 | 0.2 | - | 30 |
| 11 | Zn powder adhered after annealing | 11 | 3.0 | 0.0001 | - | 180 |
| 12 | Zn powder adhered after annealing | 11 | 3.0 | 0.01 | - | 240 |
| 13 | Zn powder adhered after annealing | 11 | 3.0 | 0.03 | - | 220 |
| 14 | Zn powder adhered after annealing | 11 | 3.0 | 0.08 | - | 300 |
| 15 | Zn powder adhered after annealing | 11 | 3.0 | 1 | - | 190 |
| 16 | Zn powder adhered after annealing | 11 | 3.0 | 2 | - | 290 |
| 17 | Zn powder adhered after annealing | 11 | 3.0 | 0.2 | Ti 0.01% | 300 |
| 18 | Zn powder adhered after annealing | 11 | 3.0 | 0.2 | Ni 0.01% | 320 |
| 19 | Zn powder adhered after annealing | 11 | 3.0 | 0.2 | Zr 0.01% | 280 |
| 20 | Zn powder adhered after annealing | 11 | 3.0 | 0.2 | Ni 0.01% | 320 |
| 21 | Zn powder adhered after annealing | 11 | 3.0 | 0.2 | Sr 0.01% | 310 |
| 22 | Zn powder adhered after annealing | 11 | 3.0 | 0.2 | Fe 0.01% | 320 |
| 23 | Zn powder adhered after annealing | 11 | 3.0 | 0.2 | Sb 0.01 % | 300 |
| 24 | Zn powder adhered after annealing | 11 | 3.0 | 0.2 | Pb 0.01 % | 290 |
| 25 | Zn powder adhered after annealing | 11 | 3.0 | 0.2 | Sn 0.01 % | 280 |
| 26 | Zn powder adhered after annealing | 11 | 3.0 | 0.2 | Ca 0.01% | 310 |
| 27 | Zn powder adhered after annealing | 11 | 3.0 | 0.2 | Co 0.01% | 300 |
| 28 | Zn powder adhered after annealing | 11 | 3.0 | 0.2 | Mn 0.01 % | 300 |
| 29 | Zn powder adhered after annealing | 11 | 3.0 | 0.2 | P 0.01% | 310 |
| 30 | Zn powder adhered after annealing | 11 | 3.0 | 0.2 | B 0.01% | 320 |
| 31 | Zn powder adhered after annealing | 11 | 3.0 | 0.2 | Bi 0.01% | 290 |
| 32 | Zn powder adhered after annealing | 11 | 3.0 | 0.2 | Cr 0.01 % | 300 |
| 33 | Zn powder adhered after annealing | 11 | 3.0 | 0.2 | Sc 0.01% | 290 |
| 34 | Zn powder adhered after annealing | 11 | 3.0 | 0.2 | Y 0.01% | 310 |

**[Table 1B]**

| No. | Manufacturing method | Hot-dip plated steel sheet | | | | |
|---|---|---|---|---|---|---|
| | | Average composition (mass%) remainder: Zn and impurities | | | | Plating adhesion amount (total amount on both surfaces) (g/m²) |
| | | Al | Mg | Si | Others | |
| 35 | Zn powder adhered after annealing | 11 | 3.0 | 0.2 | REM 0.01% | 320 |
| 36 | Zn powder adhered after annealing | 11 | 3.0 | 0.2 | Hf 0.01% | 290 |
| 37 | Zn powder adhered after annealing | 11 | 3.0 | 0.2 | C 0.01% | 290 |
| 38 | Zn powder adhered after annealing | 11 | 3.0 | - | Ti 0.01% | 300 |
| 39 | Zn powder adhered after annealing | 11 | 3.0 | - | Ni 0.01% | 320 |
| 40 | Zn powder adhered after annealing | 11 | 3.0 | - | Z r0.01% | 320 |
| 41 | Zn powder adhered after annealing | 11 | 3.0 | - | Ni 0.01% | 310 |
| 42 | Zn powder adhered after annealing | 11 | 3.0 | - | Sr 0.01 % | 310 |
| 43 | Zn powder adhered after annealing | 11 | 3.0 | - | Fe 0.01% | 290 |
| 44 | Zn powder adhered after annealing | 11 | 3.0 | - | Sb 0.01% | 300 |
| 45 | Zn powder adhered after annealing | 11 | 3.0 | - | Pb 0.01% | 320 |
| 46 | Zn powder adhered after annealing | 11 | 3.0 | - | Sn 0.01% | 310 |
| 47 | Zn powder adhered after annealing | 11 | 3.0 | - | Ca 0.01% | 290 |
| 48 | Zn powder adhered after annealing | 11 | 3.0 | - | Co 0.01% | 300 |
| 49 | Zn powder adhered after annealing | 11 | 3.0 | - | Mn 0.01% | 280 |
| 50 | Zn powder adhered after annealing | 11 | 3.0 | - | P 0.01% | 280 |
| 51 | Zn powder adhered after annealing | 11 | 3.0 | - | B 0.01% | 310 |
| 52 | Zn powder adhered after annealing | 11 | 3.0 | - | Bi 0.01% | 310 |
| 53 | Zn powder adhered after annealing | 11 | 3.0 | - | Cr 0.01% | 280 |
| 54 | Zn powder adhered after annealing | 11 | 3.0 | - | Sc 0.01% | 290 |
| 55 | Zn powder adhered after annealing | 11 | 3.0 | - | Y 0.01% | 280 |
| 56 | Zn powder adhered after annealing | 11 | 3.0 | - | REM 0.01% | 320 |
| 57 | Zn powder adhered after annealing | 11 | 3.0 | - | Hf 0.01% | 320 |
| 58 | Zn powder adhered after annealing | 11 | 3.0 | - | C 0.01% | 280 |
| 59 | Zn powder adhered after annealing | 11 | 3.0 | - | Ti 0.01% + Ca 0.01 % | 310 |
| 60 | Zn powder adhered after annealing | 11 | 3.0 | - | - | 300 |
| 61 | Zn powder adhered after annealing | 11 | 3.0 | 0.2 | - | 280 |
| 62 | Zn powder adhered after annealing | 11 | 3.0 | 0.2 | - | 310 |
| 63 | Zn powder adhered after annealing | 9 | 3.0 | 0.2 | - | 290 |
| 64 | Zn powder adhered after annealing | 23 | 3.0 | 0.2 | - | 310 |
| 65 | Zn powder adhered after annealing | 11 | 0.5 | 0.2 | - | 290 |
| 66 | Zn powder adhered after annealing | 11 | 11 | 0.2 | - | 310 |
| 67 | Zn powder adhered after annealing | 11 | 3.0 | 0.2 | - | 320 |
| 68 | Zn powder adhered after plating | 11 | 3.0 | 0.2 | - | 310 |
| 69 | No Zn powder adhered | 11 | 3.0 | 0.2 | - | 330 |

| | | | | | | |
|---|---|---|---|---|---|---|
| Underlined values indicate values outside the scope of the present invention. | | | | | | |

**[Table 2A]**

| No. | Hot-dip plated steel sheet | | | | | | Evaluation | | Remarks |
|---|---|---|---|---|---|---|---|---|---|
| | t/4 position | | t/2 position | | 3t/4 position | | Visual evaluation | Corrosion resistance | |
| | [Zn phase] (area%) | B/A (%) | [Zn phase] (area%) | B/A (%) | [Zn phase] (area%) | B/A (%) | | | |
| 1 | 2 | 4 | 3 | 5 | 2 | 4 | A | G | |
| 2 | 3 | 6 | 4 | 7 | 4 | 7 | A | F | |
| 3 | 2 | 4 | 2 | 3 | 1 | 2 | A | F | |
| 4 | 2 | 3 | 3 | 4 | 3 | 4 | A | G | |
| 5 | 5 | 8 | 2 | 4 | 2 | 5 | A | G | |
| 6 | 3 | 5 | 4 | 6 | 2 | 5 | A | F | Inventive Example |
| 7 | 5 | 9 | 4 | 8 | 4 | 8 | A | F | |
| 8 | 5 | 8 | 3 | 8 | 5 | 9 | A | F | |
| 9 | 5 | 9 | 4 | 9 | 3 | 8 | A | F | |
| 10 | 5 | 9 | 4 | 8 | 5 | 9 | A | G | |
| 11 | 2 | 5 | 3 | 7 | 2 | 4 | A | F | |
| 12 | 3 | 8 | 5 | 9 | 5 | 9 | A | F | |
| 13 | 5 | 9 | 1 | 3 | 4 | 9 | A | F | |
| 14 | 2 | 3 | 3 | 6 | 5 | 9 | A | F | |
| 15 | 5 | 7 | 6 | 10 | 4 | 8 | A | F | |
| 16 | 4 | 6 | 3 | 7 | 5 | 9 | A | F | |
| 17 | 5 | 9 | 4 | 9 | 4 | 8 | A | F | |
| 18 | 3 | 5 | 3 | 6 | 5 | 9 | A | F | |
| 19 | 4 | 8 | 5 | 9 | 2 | 4 | A | F | |
| 20 | 4 | 7 | 3 | 7 | 5 | 10 | A | F | |
| 21 | 1 | 2 | 4 | 10 | 1 | 2 | A | F | |
| 22 | 3 | 7 | 4 | 9 | 3 | 5 | A | F | |
| 23 | 3 | 5 | 3 | 6 | 3 | 6 | A | F | |
| 24 | 1 | 2 | 2 | 5 | 1 | 2 | A | F | |
| 25 | 5 | 9 | 5 | 9 | 5 | 9 | A | F | |
| 26 | 2 | 5 | 5 | 10 | 3 | 7 | A | F | |
| 27 | 1 | 2 | 4 | 9 | 2 | 4 | A | F | |
| 28 | 2 | 5 | 1 | 2 | 1 | 2 | A | F | |
| 29 | 3 | 5 | 5 | 10 | 1 | 2 | A | F | |
| 30 | 1 | 2 | 3 | 6 | 3 | 6 | A | F | |
| 31 | 3 | 7 | 1 | 2 | 3 | 5 | A | F | |
| 32 | 5 | 9 | 3 | 7 | 3 | 6 | A | F | |
| 33 | 4 | 7 | 5 | 11 | 4 | 8 | A | F | |
| 34 | 4 | 9 | 5 | 11 | 4 | 7 | A | F | |

**[Table 2B]**

| No. | Hot-dip plated steel sheet | | | | | | Evaluation | | Remarks |
|---|---|---|---|---|---|---|---|---|---|
| | t/4 position | | t/2 position | | 3t/4 position | | Visual evaluation | Corrosion resistance | |
| | [Zn phase] (area%) | B/A (%) | [Zn phase] (area%) | B/A (%) | [Zn phase] (area%) | B/A (%) | | | |
| 35 | 4 | 10 | 5 | 11 | 1 | 2 | A | F | |
| 36 | 5 | 9 | 5 | 12 | 4 | 9 | A | F | |
| 37 | 1 | 2 | 4 | 10 | 3 | 7 | A | F | |
| 38 | 3 | 6 | 2 | 3 | 3 | 8 | A | F | |
| 39 | 3 | 6 | 5 | 7 | 2 | 7 | A | F | |
| 40 | 3 | 6 | 4 | 5 | 3 | 6 | A | F | |
| 41 | 5 | 9 | 4 | 8 | 4 | 7 | A | F | |
| 42 | 5 | 7 | 5 | 8 | 2 | 5 | A | F | Inventive Example |
| 43 | 2 | 6 | 4 | 7 | 4 | 6 | A | F | |
| 44 | 2 | 4 | 1 | 4 | 3 | 7 | A | F | |
| 45 | 5 | 9 | 4 | 5 | 3 | 5 | A | F | |
| 46 | 2 | 4 | 1 | 5 | 1 | 3 | A | F | |
| 47 | 3 | 5 | 4 | 6 | 5 | 9 | A | F | |
| 48 | 3 | 7 | 1 | 3 | 3 | 4 | A | F | |
| 49 | 5 | 7 | 2 | 6 | 2 | 6 | A | F | |
| 50 | 4 | 8 | 4 | 6 | 2 | 6 | A | F | |
| 51 | 4 | 8 | 5 | 6 | 4 | 7 | A | F | |
| 52 | 4 | 7 | 3 | 7 | 4 | 8 | A | F | |
| 53 | 1 | 4 | 3 | 4 | 2 | 4 | A | F | |
| 54 | 3 | 6 | 5 | 10 | 2 | 4 | A | F | |
| 55 | 2 | 5 | 5 | 7 | 3 | 7 | A | F | |
| 56 | 2 | 6 | 5 | 6 | 5 | 8 | A | F | |
| 57 | 5 | 7 | 3 | 7 | 5 | 8 | A | F | |
| 58 | 5 | 7 | 3 | 7 | 3 | 6 | A | F | |
| 59 | 3 | 5 | 4 | 6 | 3 | 4 | A | F | |
| 60 | 10 | 19 | 7 | 15 | 16 | 19 | B | F | |
| 61 | 8 | 14 | 6 | 11 | 8 | 15 | A | F | |
| 62 | 5 | 8 | 5 | 10 | 5 | 9 | A | F | |
| 63 | 7 | 15 | 5 | 11 | 8 | 16 | A | P | Comparati ve Example |
| 64 | 19 | 28 | 16 | 27 | 18 | 26 | B | P | |
| 65 | 8 | 17 | 9 | 18 | 7 | 16 | A | P | |
| 66 | 29 | 39 | 25 | 40 | 26 | 42 | C | P | |
| 67 | 35 | 60 | 28 | 58 | 29 | 62 | C | F | |
| 68 | 21 | 43 | 22 | 40 | 20 | 45 | C | F | |
| 69 | 30 | 55 | 31 | 58 | 30 | 59 | C | F | |

| | | | | | | | | | |
|---|---|---|---|---|---|---|---|---|---|
| Underlined values indicate values outside the scope of the present invention. | | | | | | | | | |

### INDUSTRIAL APPLICABILITY

The Zn-Al-Mg-based hot-dip plated steel sheet of the present disclosure has high industrial applicability because the metallic luster of the surface of the hot-dip plated layer is excellent, and the corrosion resistance is also excellent.

### REFERENCE SIGNS LIST

1 Steel sheet
2 Hot-dip plated layer
2a Surface of hot-dip plated layer
3 Cross section (exposed surface) at t/4 position
4 Cross section (exposed surface) at t/2 position
5 Cross section (exposed surface) at 3t/4 position

## Claims

1. A Zn-Al-Mg-based hot-dip plated steel sheet, comprising a steel sheet and a hot-dip plated layer formed on a surface of the steel sheet, wherein
the hot-dip plated layer contains, as an average composition, Al: more than 10 to 22 mass% and Mg: 1.0 to 10 mass%, with a remainder including Zn and impurities, and
in a case where a 5 mm square cross section parallel to a surface of the hot-dip plated layer is exposed at any position of a 3t/4 position, a t/2 position, and a t/4 position from the surface with a thickness of the hot-dip plated layer represented by t, an area fraction of a [Zn phase] of a plating microstructure in at least one of the cross sections is less than 20%.

2. A Zn-Al-Mg-based hot-dip plated steel sheet, comprising a steel sheet and a hot-dip plated layer formed on a surface of the steel sheet, wherein
the hot-dip plated layer contains, as an average composition, Al: more than 10 to 22 mass% and Mg: 1.0 to 10 mass%, with a remainder including Zn and impurities, and
further contains one or two selected from the group consisting of group A and group B below, and
in a case where a 5 mm square cross section parallel to a surface of the hot-dip plated layer is exposed at any position of a 3t/4 position, a t/2 position, and a t/4 position from the surface with a thickness of the hot-dip plated layer represented by t, an area fraction of a [Zn phase] of a plating microstructure in at least one of the cross sections is less than 20%:
[group A] Si: 0.0001 to 2 mass%
[group B] one or two or more of Ni, Ti, Zr, Sr, Fe, Sb, Pb, Sn, Ca, Co, Mn, P, B, Bi, Cr, Sc, Y, REM, Hf, and C: 0.0001 to 2 mass% in total.

3. The Zn-Al-Mg-based hot-dip plated steel sheet according to claim 1 or 2, wherein a ratio (B/A (%)) of an area fraction B of a [Zn phase] to a total area fraction A of a [Zn phase] and an [Al/MgZn₂/Zn ternary eutectic structure] of a plating microstructure in at least one of the cross sections is less than 20%.

4. The Zn-Al-Mg-based hot-dip plated steel sheet according to claim 2, wherein the hot-dip plated layer has an average composition containing the group A in terms of mass%.

5. The Zn-Al-Mg-based hot-dip plated steel sheet according to claim 2, wherein the hot-dip plated layer has an average composition containing the group B in terms of mass%.
